# EUROPEAN PATENT SPECIFICATION

(11) **EP 0 739 000 B1**
(45) Date of publication and mention of the grant of the patent: **10.07.2002**
(21) Application number: 95302482.5
(22) Date of filing: 12.04.1995
(51) Int. Cl.: G11B 5/54

(54) **Magnetic disk drive**
Magnetplattenantrieb
Entraînement de disque magnétique

(43) Date of publication of application: 23.10.1996
(73) Proprietor: FUJITSU LIMITED, Kawasaki-shi, Kanagawa 211 (JP)
(72) Inventor: Kouhei, Tohru, c/o Fujitsu Limited, Kawasaki-shi, Kanagawa 211 (JP); Yamada, Tomoyoshi, c/o Fujitsu Limited, Kawasaki-shi, Kanagawa 211 (JP); Kuroba, Yasumasa, c/o Fujitsu Limited, Kawasaki-shi, Kanagawa 211 (JP)
(74) Representative: Fane, Christopher Robin King

(56) References cited:
- EP-A- 0 453 109
- US-A- 5 305 170
- PATENT ABSTRACTS OF JAPAN vol. 9, no. 217 (P-385) 4 September 1985 & JP-A-60 076 069 (MITSUBISHI) 30 April 1985
- PATENT ABSTRACTS OF JAPAN vol. 17, no. 194 (P-1522) 15 April 1993 & JP-A-04 341 983 (SONY) 27 November 1992

## Description

This invention relates to a magnetic disk apparatus or magnetic disk drive provided with a mechanism which can protect a head and a disk from an impact when the apparatus drops or in a like case.

In recent years, magnetic disk apparatus which are used as external storage apparatus for computers or like apparatus are increased in recording density and reduced in size and thickness. As a magnetic disk apparatus reduced in size and thickness, a portable magnetic disk apparatus has been developed which can be inserted into an IC card slot when it is to be used. Where a magnetic disk apparatus is of the portable type, when it is carried, it may possibly be acted upon by an impact as it drops or in a like case. Since the acceleration by an impact upon dropping amounts to several thousands G, a magnetic disk apparatus is required to have such a high degree of reliability that, even when it drops, a head slider, a disk medium or any other element in the magnetic disk apparatus may not be damaged.

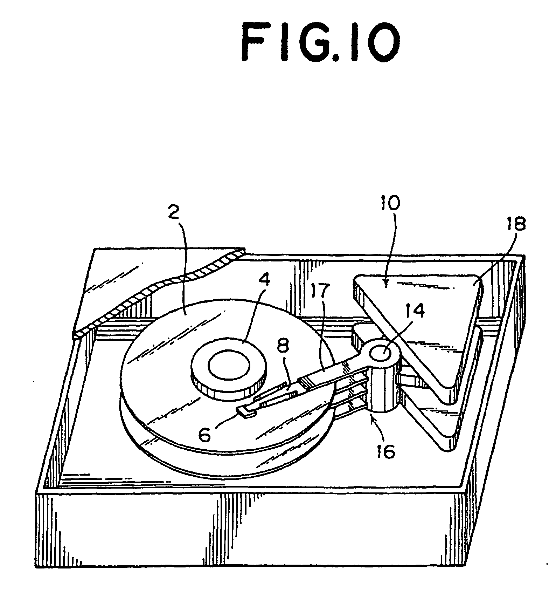

FIG. 10 is a perspective view, partly broken, of a conventional magnetic disk apparatus. The apparatus shown includes a pair of magnetic disk mediums 2, a spindle mechanism 4 for driving the magnetic disk mediums 2 to rotate, four head sliders 6 provided in an opposing relationship to the magnetic disk mediums 2 and each carrying thereon a magnetic head for writing and reading out information onto and from the opposing magnetic disk medium 2, a head suspension mechanism 8 for supporting each of the head slider 6, and an actuator 10 for actuating the head suspension mechanisms 8 to cause the magnetic heads to perform a seeking operation in a radial direction of the magnetic disk media 2.

The head suspension mechanism 8 includes a load beam and a gimbal. The actuator 10 includes an actuator arm assembly 16 mounted for rotation around a shaft 14 and having a plurality of (four) arms 17 on which the load beams of the head suspension mechanisms 8 are mounted, and a driving section (voice coil motor) 18 for driving the actuator arm assembly 16 to rotate.

Some of magnetic disk apparatus of the type just described include a loading/unloading mechanism (not shown). The loading/unloading mechanism extracts, when the power supply is disconnected, energy of inertial rotation of the spindle mechanism 4 as a back electromotive force of a spindle motor and flows an electric current through the voice coil motor of the actuator 10 to energize the actuator 10 so that the head suspension mechanisms 8 run on tapered running on members provided on a cover or the like to lift the head sliders 6 from the magnetic disk media 2 to perform unloading. On the other hand, upon loading, the power supply is connected to energize the actuator 10 to move the head sliders 6 to stand-by tracks (also called zero cylinders) on the magnetic disk media 2.

Where the loading/unloading mechanism described above is employed, even if the head sliders are lifted and retracted upon unloading, when the head sliders are spaced away from the magnetic disk media or are loaded onto the magnetic disk media again, the head sliders move in unstable behaviors, whereupon an edge of a head slider is sometimes contacted with the opposing magnetic disk medium to make a cause of crash of the head.

Further, from such a reason that the rigidity of a structure such as the head suspension mechanism or the loading/unloading mechanism is low, if an impact acts upon the apparatus due to a drop of the apparatus or the like, even if the apparatus is in a condition after unloading has been performed, a head slider may collide with a magnetic disk medium to cause damage to the head slider or the magnetic disk medium. The loading/unloading mechanism provides further problems peculiar thereto such as the problem that the back electromotive force of the spindle motor which is used as an energy source upon unloading cannot be assured sufficiently due to a drop of inertia of a rotating section and a drop of efficiency of the spindle motor as a result of reduction in size of the apparatus.

Accordingly, it is an object of the present invention to provide a magnetic disk apparatus by which a magnetic head (or a head slider) and a magnetic disk medium can be protected from an impact upon dropping of the apparatus or the like without using a loading/unloading mechanism.

In accordance with a first aspect of the present invention, there is provided a magnetic disk apparatus, comprising a housing; a magnetic disk medium accommodated for rotation in the housing; spindle means for rotating the magnetic disk medium; a magnetic head for writing and reading out information onto and from the magnetic disk medium; head suspension means for supporting the magnetic head thereon; actuator means for driving the head suspension means to move the magnetic head in a radial direction of the magnetic disk medium; retraction means for retracting the magnetic head to a particular area on the magnetic disk medium when the spindle means is rendered inoperative; and means provided at a location above the magnetic disk medium in an opposing relationship to the particular area of the magnetic disk medium for pressing at least one of the magnetic head and the head suspension means against the magnetic disk medium.

Since the pressing means is provided at the location above the magnetic disk medium in an opposing relationship to the particular area of the magnetic disk medium, the magnetic head can be prevented from being spaced away from the face of the magnetic disk medium by the pressing means when the magnetic disk medium is in a stopping condition.

In accordance with a second aspect of the present invention, there is provided a magnetic disk apparatus, comprising:
a housing;
a magnetic disk medium accommodated for rotation in said housing;
spindle means for rotating said magnetic disk medium;
a magnetic head for writing and reading out information onto and from said magnetic disk medium;
head suspension means for supporting said magnetic head thereon;
actuator means for driving said head suspension means to move said magnetic head in a radial direction of said magnetic disk medium;
retraction means for retracting said magnetic head to a particular area on said magnetic disk medium when said spindle means is rendered inoperative; and
displacement restriction means for limiting vertical displacement of said head when an external force is applied to said magnetic disk apparatus, the displacement restriction means comprising a displacement restriction member mounted on an inner side of the housing and located above the magnetic disk medium in an opposing relationship to the particular area of the magnetic disk medium, the displacement restriction means defining a gap of less than 200µm through which the head may be vertically displaced.

In accordance with a third aspect of the present invention, there is provided a magnetic disk apparatus, comprising:
a housing;
a magnetic disk medium accommodated for rotation in said housing;
spindle means for rotating said magnetic disk medium;
a magnetic head for writing and reading out information onto and from said magnetic disk medium;
head suspension means for supporting said magnetic head thereon; and
actuator means for driving said head suspension means to move said magnetic head in a radial direction of said magnetic disk medium, said actuator means including an arm to which said head suspension means is secured;
wherein a displacement restriction member is secured to said arm and extends to a distal end of said head suspension means, the displacement restriction member and the magnetic head cooperatively defining a gap therebetween when the magnetic head is in the read/write position so as to restrict vertical displacement of the magnetic head when an external force is applied to the magnetic disk apparatus.

In accordance with a fourth aspect of the present invention there is provided a magnetic disk apparatus, comprising:
a housing;
a magnetic disk medium accommodated for rotation in said housing;
spindle means for rotating said magnetic disk medium;
a magnetic head for writing and reading out information onto and from said magnetic disk medium;
head suspension means for supporting said magnetic head thereon;
actuator means for driving said head suspension means to move said magnetic head in a radial direction to said magnetic disk medium; and
retraction means for retracting said magnetic head to a particular area on said magnetic disk medium when said spindle means is rendered inoperative;
wherein an arresting member is secured to said head suspension means around a position at which said magnetic head is mounted on said head suspension means;
a displacement restriction member is provided at a location above said magnetic disk medium in an opposing relationship to said particular area of said magnetic disk medium, said displacement restriction member being made of a material which is flexible in a direction in a plane of a seeking direction of said magnetic head but is rigid in a direction perpendicular to the plane; and
when said magnetic disk medium stops rotating said displacement restriction member and said arresting member contact each other to prevent said magnetic head from moving away from a face of said magnetic disk medium.

The above and other objects, features and advantages of the present invention and the manner of realizing them will become more apparent, and the invention itself will best be understood from a study of the following description and appended claims with reference to the attached drawings showing some preferred embodiments of the invention.
FIG. 1A is a perspective view, partly broken, of a magnetic disk apparatus of a first embodiment of the present invention;
FIG. 1B is a side elevational view, partly in section, of the magnetic disk apparatus of FIG. 1A;
FIG. 2A is a perspective view, partly broken, of a magnetic disk apparatus of a second embodiment of the present invention;
FIG. 2B is a side elevational view, partly in section, of the magnetic disk apparatus of FIG. 2A;
FIG. 3A is a perspective view, partly broken, of a magnetic disk apparatus of a third embodiment of the present invention;
FIG. 3B is a side elevational view, partly in section, of the magnetic disk apparatus of FIG. 3A;
FIG. 4A is a perspective view, partly broken, of a magnetic disk apparatus of a fourth embodiment of the present invention;
FIG. 4B is a side elevational view, partly in section, of the magnetic disk apparatus of FIG. 4A;
FIG. 5A is a perspective view, partly broken, of a magnetic disk apparatus of a fifth embodiment of the present invention;
FIG. 5B is a side elevational view, partly in section, of the magnetic disk apparatus of FIG. 5A;
FIG. 6A is a perspective view, partly broken, of an example of a magnetic disk apparatus;
FIG. 6B is a side elevational view, partly in section, of the magnetic disk apparatus of FIG. 6A;
FIG. 7A is a perspective view, partly broken, of an example of a magnetic disk apparatus;
FIG. 7B is a side elevational view, partly in section, of the magnetic disk apparatus of FIG. 7A;
FIG. 8A is a perspective view, partly broken, of a magnetic disk apparatus of a sixth embodiment of the present invention;
FIG. 8B is a side elevational view, partly in section, of the magnetic disk apparatus of FIG. 8A;
FIG. 9A is a perspective view, partly broken, of a magnetic disk apparatus of a seventh embodiment of the present invention;
FIG. 9B is a side elevational view, partly in section, of the magnetic disk apparatus of FIG. 9A; and
FIG. 10 is a perspective view, partly broken, of a conventional magnetic disk apparatus.

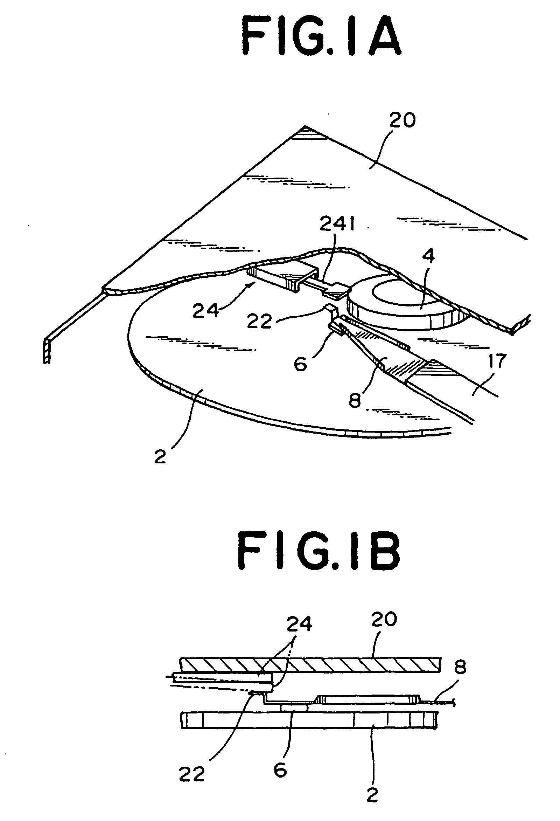

FIGS. 1A and 1B show a first embodiment of the present invention, and FIG. 1A is a perspective view, partly broken, of a magnetic disk apparatus and FIG. 1B is a side elevational view, partly in section, of the apparatus of FIG. 1A. Substantially like elements are denoted by like reference numerals through all of the figures.

In the present embodiment, a magnetic disk medium 2, a spindle mechanism 4 and other parts are accommodated in a housing 20. In order to press at least one of a head slider 6 and a head suspension mechanism 8 (in the present embodiment, the head suspension mechanism 8) against the magnetic disk medium 2 when the power supply to the apparatus is off and the magnetic disk medium 2 is in a stopping condition, an L-shaped metal member 22 is provided at an end of a load beam of the head suspension mechanism 8 and a load mechanism 24 is provided at a location in the inside of the cover 20 of the housing in an opposing relationship to a contact start/stop area (CSS area) on the inner side of the magnetic disk medium 2. The load mechanism 24 includes a leaf spring 241 and an electromagnet (not shown). The electromagnet is constructed such that, when the disk medium stops, the electromagnet is deenergized to cancel its attracting force to the leaf spring 241.

Subsequently, operation of the apparatus after the power supply to the apparatus is disconnected will be described. After the power supply is disconnected and the control of the actuator is interrupted, the head slider 6 is retracted to a location on a particular area (for example, the CSS area) on the inner side of the magnetic disk medium 2 by a known automatic retraction mechanism. After the spindle mechanism 4 which has been rotated by a force of inertia of itself stops, the electromagnet of the load mechanism 24 is put into a deenergized condition to cancel its attracting force to the leaf spring 241 so that the leaf spring 241 is moved down to press the L-shaped metal member 22 provided at the end of the gimbal of the head suspension mechanism 8 against the magnetic disk medium 2.

Here, it is assumed that the components of the apparatus are acted upon by an acceleration in a direction perpendicular to the magnetic disk medium 2 by an impact produced when the apparatus drops. When the mass of the head slider 6 and the head suspension mechanism 8 is represented by mH and the acceleration acting upon them is a, the members are acted upon by a force of inertia of mH x a = FH. If the force FP exerted from the load mechanism 24 is higher than the inertial force FH, that is, if FH < FP, then the head slider 6 is kept pressed against the magnetic disk medium 2 and they will not be spaced away from each other. Consequently, the head slider 6 and the magnetic disk medium 2 are prevented from being damaged. While, in the present embodiment, a load is applied to part of the head suspension mechanism 8, the apparatus may be modified such that a load is applied to the head slider 6 itself.

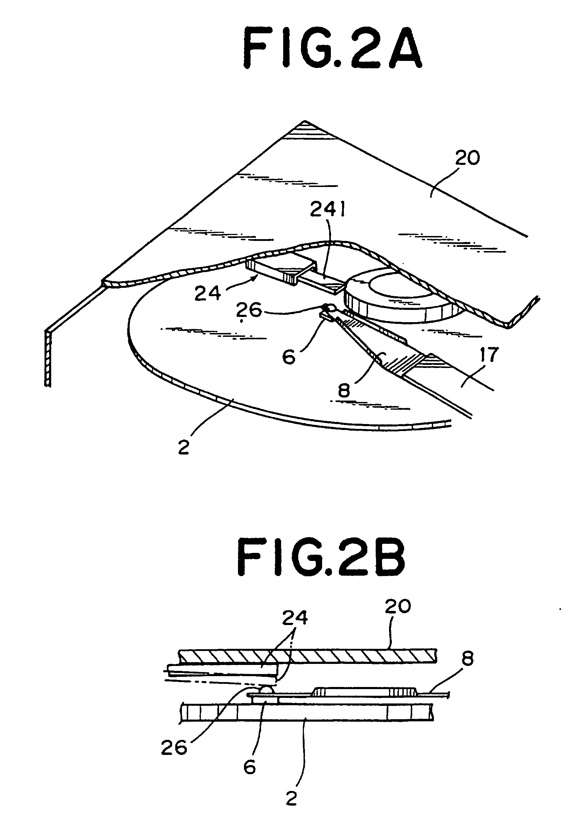

FIGS. 2A and 2B show a second embodiment of the present invention, and FIG. 2A is a perspective view, partly broken, of a magnetic disk apparatus and FIG. 2B is a side elevational view, partly in section, of the magnetic disk apparatus of FIG. 2A. In the present embodiment, in order for the load mechanism 24 to press the head suspension mechanism 8 against the magnetic disk medium 2, the L-shaped metal member in the first embodiment of FIGS. 1A and 1B is replaced by a projection 26 provided at a location of the load beam of the head suspension mechanism 8 (in a mechanism wherein a gimbal is formed integrally at the end of a load beam, at a location of the gimbal) corresponding substantially to a central portion of the head slider 6. With the construction just described, when the power supply is disconnected, a load can be applied to a location nearer to the center of the head slider 6 by the load mechanism 24, and consequently, the effect in suppressing the relative displacement of the head slider 6 is enhanced.

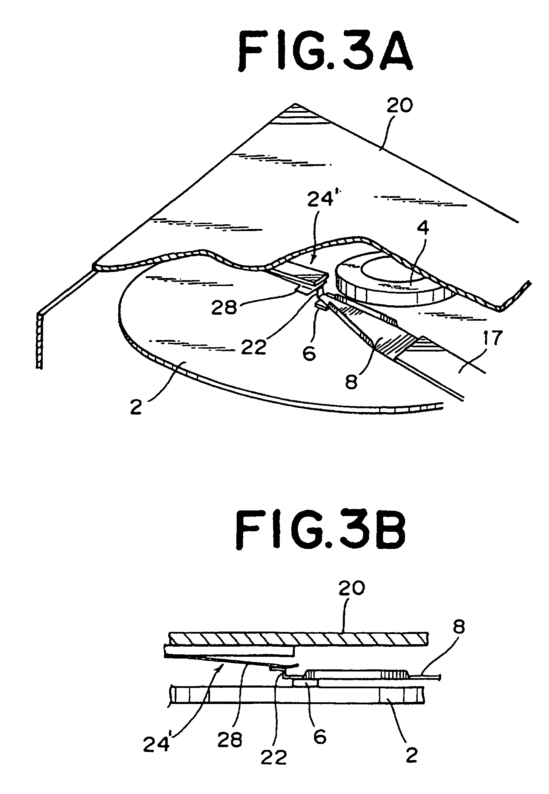

FIGS. 3A and 3B show a third embodiment of the present invention, and FIG. 3A is a perspective view, partly broken, of a magnetic disk apparatus and FIG. 3B is a side elevational view, partly in section, of the magnetic disk apparatus of FIG. 3A. In the present embodiment, the load mechanism 24 which is positively driven by a power source (an electromagnet, a piezoelectric element, a heater or the like) in the first embodiment of FIGS. 1A and 1B is replaced by a load mechanism 24' which is provided on the inner side of the cover 20 and does not require a power source. The magnetic disk apparatus of the present embodiment is similar to the magnetic disk apparatus of the first embodiment of FIGS. 1A and 1B in that an L-shaped metal member 22 is provided at the end of the load beam of the head suspension mechanism 8. The load mechanism 24' includes a leaf spring 28 having a comparatively low spring constant in order to press the head slider 6 against the magnetic disk medium 2 by way of the L-shaped metal member 22 and the head suspension mechanism 8.

When the power supply is disconnected and the control of the actuator is interrupted, the head slider 6 is moved to the CSS area on the inner side of the magnetic disk medium 2 by the automatic retraction mechanism. In this instance, the L-shaped metal member 22 mounted at the end of the load beam of the head suspension mechanism 8 enters below the load mechanism 24' and is contacted with the bottom face of the leaf spring 28. Then, the head slider 6 is pressed against the magnetic disk medium 2 by the spring force of the leaf spring 28. With the magnetic disk apparatus of the present embodiment, since the power source is not required for the load mechanism, the apparatus is simplified in construction.

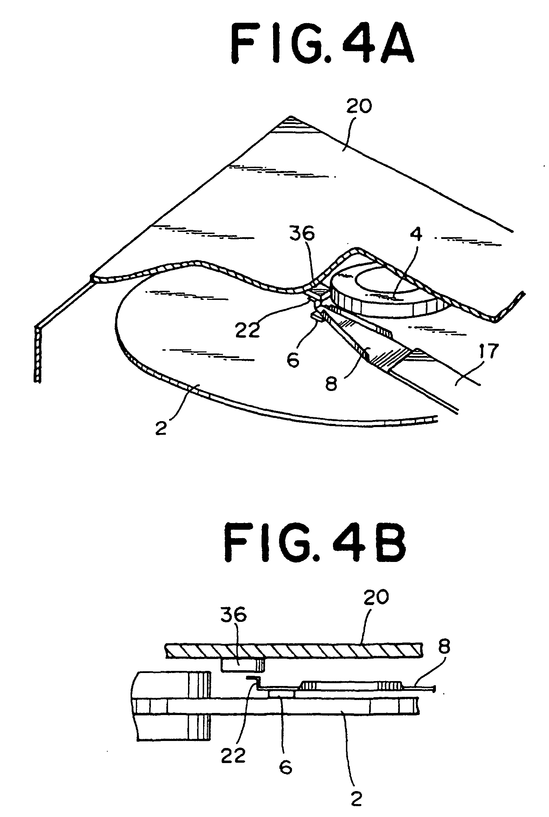

FIGS. 4A and 4B show a fourth embodiment of the present invention, and FIG. 4A is a perspective view, partly broken, of a magnetic disk apparatus and FIG. 4B is a side elevational view, partly in section, of the magnetic disk apparatus of FIG. 4A. In the present embodiment, in order to restrict the amount of upward movement of the head slider 6 and the head suspension mechanism 8 in the thicknesswise direction of the disk, a displacement restriction member 36 is provided at a location of the inner side of the cover 20 of the housing in an opposing relationship to the CSS area on the inner side of the magnetic disk medium 2, and the L-shaped metal member 22 provided at the end of the gimbal of the head suspension mechanism 8 is positioned below the displacement restriction member 36 when the magnetic disk medium 2 stops.

When the L-shaped metal member 22 is positioned below the displacement restriction member 36, a small gap is defined between them. The displacement restriction member 36 restricts upward movement of the head slider 6 when the apparatus is acted upon by an acceleration due to an impact to a certain amount. If it is assumed that the head slider 6 is moved upwardly by h and the spring constant of the head suspension mechanism 8 is k, then the energy stored in the head suspension mechanism 8 is given by kh²/2, and the head slider 6 collides with the magnetic disk medium 2 with this energy.

Accordingly, the energy upon collision can be reduced by restricting the upward movement amount h to a small amount by the provision of the displacement restriction member 36, and consequently, damage to the head slider 6 and the magnetic disk medium 2 can be prevented. It is to be noted that part of the displacement restriction member 36 may be formed from a dashpot element such as a sponge member, a spring element such as a leaf spring, or a member including a dashpot element and a spring element. Further, the displacement restriction member may be constructed so as to have a profile conforming to the locus of movement of the L-shaped metal member 22 in order to prevent upward movement of the head slider 6 irrespective of the position of the head slider 6.

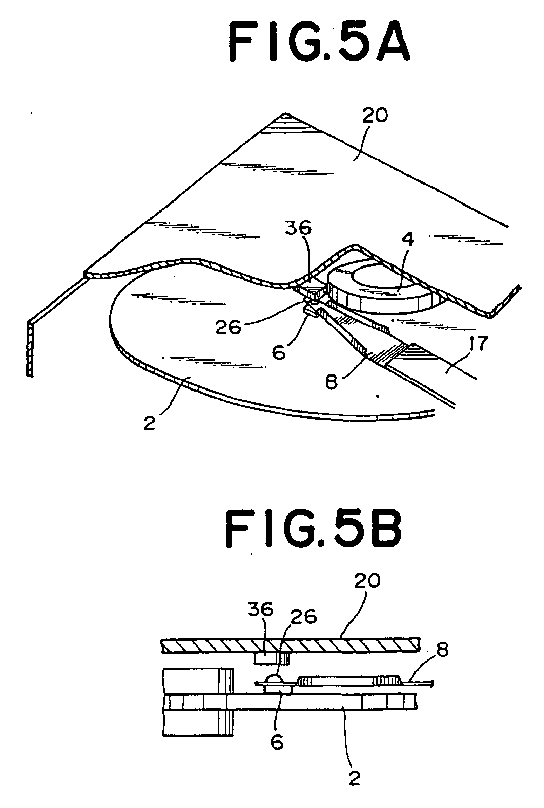

FIGS. 5A and 5B show a fifth embodiment of the present invention, and FIG. 5A is a perspective view, partly broken, of a magnetic disk apparatus and FIG. 5B is a side elevational view, partly in section, of the magnetic disk apparatus of FIG. 5A. In the present embodiment, similarly as in the second embodiment of FIGS. 2A and 2B, a projection 26 is provided at a location of the gimbal of the head suspension mechanism 8 corresponding to a central portion of the head slider 6 such that it may be positioned below the displacement restriction member 36 when the magnetic disk medium 2 stops. With the construction, since a portion of the head slider 6 in the proximity of the center can be held down, a burden is not applied to the head suspension mechanism 8, and consequently, damage to the head suspension mechanism 8 can be prevented.

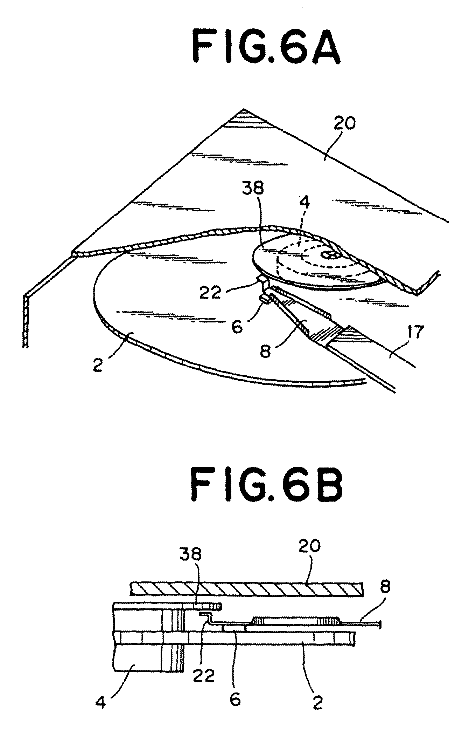

FIG. 6A is a perspective view, partly broken, of an example of a magnetic disk apparatus, and FIG. 6B is a side elevational view, partly in section, of the magnetic disk apparatus of FIG. 6A. In the present example, a displacement restriction member 38 in the form of a disk is mounted on a movable portion (a hub, a disk clamper, a spacer ring or the like) of the spindle mechanism 4 (in the present example, the displacement restriction member is formed integrally at an upper portion of the hub), and the L-shaped metal member 22 is provided at the end of the gimbal of the head suspension mechanism 8.

When the power supply to the apparatus is disconnected and the control of the actuator is stopped, the head slider 6 is automatically retracted to the CSS area on the inner side of the magnetic disk medium 2, that is, to a position below the displacement restriction member 38 by the automatic retraction mechanism. Consequently, damage to the head slider 6 and the magnetic disk medium 2 is prevented in a similar manner as in the preceding embodiments.

In the present example, when compared with the case wherein the displacement restriction member is mounted on the inner side of the cover 20 as in the preceding embodiments, the settlement accuracy of the position of the displacement restriction member 38 from the plane of the magnetic disk medium can be enhanced. Consequently, the distance between the lower face of the displacement restriction member 38 and the upper face of the end of the L-shaped metal member 22 can be set to a low value of approximately 200 µm or less, and upward movement of the head slider 6 can be restricted effectively.

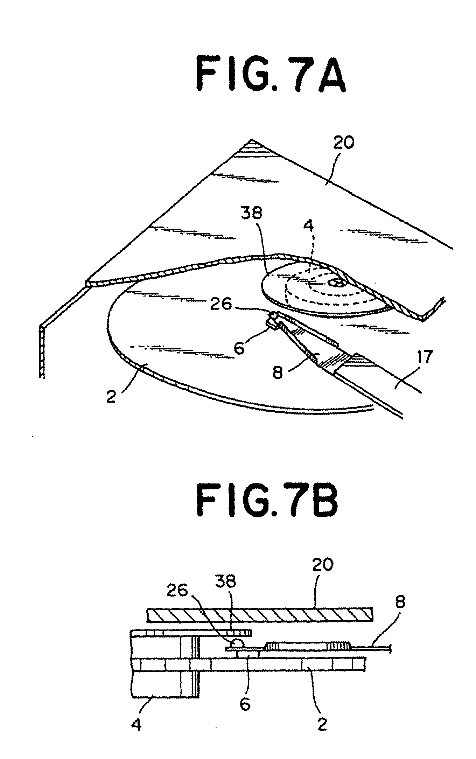

FIG. 7A is a perspective view, partly broken, of an example of a magnetic disk apparatus, and FIG. 7B is a side elevational view, partly in section, of the magnetic disk apparatus of FIG. 7A. The present example is characterized in that the L-shaped metal member 22 in the previous example is replaced by a projection 26 provided at a location of the gimbal of the head suspension mechanism 8 corresponding to a central portion of the slider in a similar manner as in the second embodiment of FIGS. 2A and 2B. Due to the construction, in addition to the effects of the preceding example, since a portion of the head slider 6 in the proximity of the center can be held down, a further effect can be achieved in that a burden is applied less likely to the head suspension mechanism 8 and damage to the head suspension mechanism 8 can be prevented.

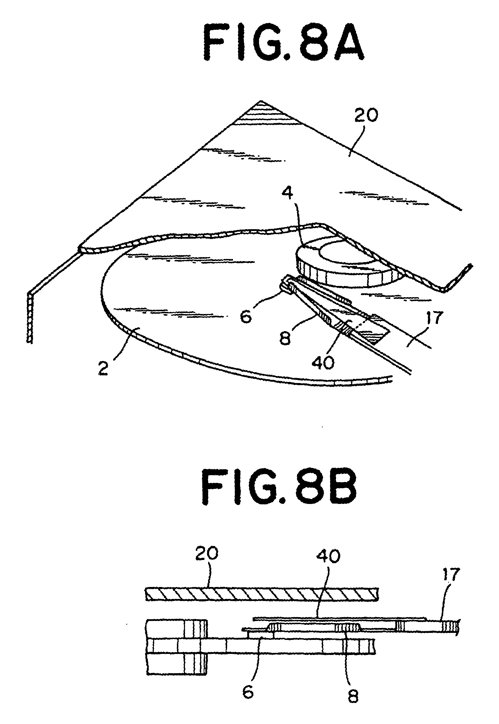

FIGS. 8A and 8B show a sixth embodiment of the present invention, and FIG. 8A is a perspective view, partly broken, of a magnetic disk apparatus and FIG. 8B is a side elevational view, partly in section, of the magnetic disk apparatus of FIG. 8A. In the present embodiment, a displacement restriction member 40 is mounted at an end of a support arm 17 of the actuator 10. Also with the present construction, since the displacement restriction member 40 functions similarly as in the fourth and fifth embodiments, and the previous two examples, damage to the head slider 6 and the magnetic disk medium 2 can be prevented. Further, in the present embodiment, since the displacement restriction member 40 is always positioned above the head slider 6, upward movement of the head slider 6 can be suppressed whichever position the head slider 6 is positioned whether the automatic retraction mechanism is adopted or not.

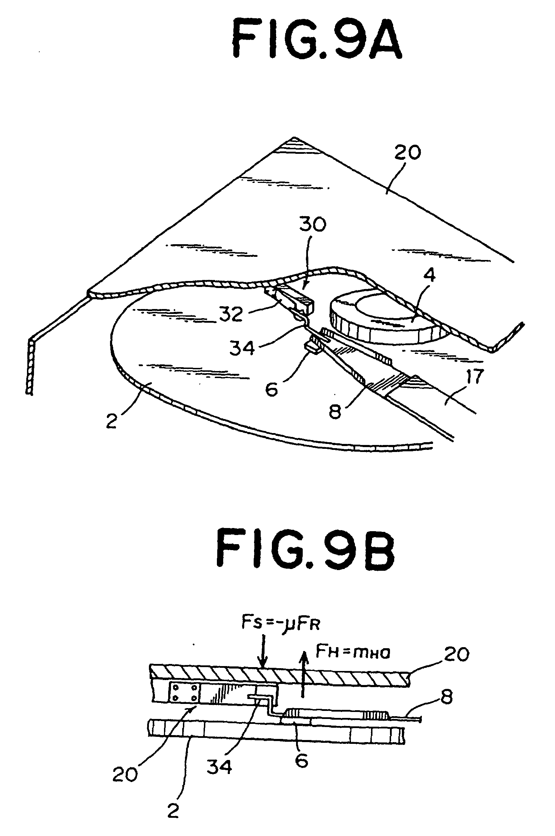

FIGS. 9A and 9B show a seventh embodiment of the present invention, and FIG. 9A is a perspective view, partly broken, of a magnetic disk apparatus and FIG. 9B is a side elevational view, partly in section, of the magnetic disk apparatus of FIG. 9A. In the present embodiment, the load mechanism 24 of FIGS. 1A and 1B is replaced by a displacement attenuation leaf spring mechanism 30 provided on the inner side of the cover 20. The mechanism 30 includes a leaf spring 32 which is flexible in a direction in a plane parallel to the magnetic disk medium 2 but is rigid in another direction perpendicular to the plane. A resin member not shown is mounted on the surface at a portion of the leaf spring 32 in order to increase the coefficient µ of friction of the surface. Further, a needle (arresting member) 34 is provided at the end of the load beam of the head suspension mechanism 8 in place of the L-shaped metal member 22 of FIGS. 1A and 1B.

The principle of operation in the present embodiment will be described. When the power supply to the apparatus is disconnected and the control of the actuator is interrupted, the automatic retraction mechanism operates to retract the head slider 6 to the CSS area on the inner side of the magnetic disk medium 2. In this instance, the needle 34 mounted at the end of the load beam of the head suspension mechanism 8 is pressed against the leaf spring 32 of the displacement attenuation leaf spring mechanism 30. Here, if it is assumed that the apparatus is acted upon by an impact by a drop or the like and the acceleration to the magnetic disk medium 2 in the vertical direction is represented by "a" while the mass of the head slider 6 and the head suspension mechanism 8 is represented by m_{H}, then the inertial force F_{H} acting upon the head suspension mechanism 8 in the vertical direction is given by F_{H} = m_{H} a.

Here, the head suspension mechanism 8 is kept pressed against the leaf spring 32 from an inward direction in a seeking plane (in a direction in a plane parallel to the magnetic disk medium 2) under the force of F_{R} by the automatic retraction mechanism. The leaf spring 32 exerts a holding or resisting force of -µF_{R} to the head suspension mechanism 8 which tends to move with the inertial force of F_{H}. Accordingly, the total force F_{T} acting upon the head suspension mechanism 8 in the vertical direction is given by F_{T} = m_{H} a - µF_{R}. Further, when the head suspension mechanism 8 and the displacement attenuation leaf spring mechanism 30 are displaced from each other, energy is lost by friction between them. Consequently, the upward movement of the head slider 6 is reduced and the energy when the head slider 6 collides with the magnetic disk medium 2 is reduced. Consequently, damage to the head slider 6 and the magnetic disk medium 2 is prevented.

It is to be noted that, while the magnetic disk apparatus of the embodiments described above are constructed such that the head slider is retracted to the CSS area on the inner side of the magnetic disk medium, the CSS area to which the head slider is retraced may be provided on the outer side of the magnetic disk medium. Further, the present invention can be applied to a disk apparatus wherein a magnetic disk can be stopped while the power supply to the apparatus is on.

As described above, according to the present invention, a meritorious effect that a magnetic disk apparatus wherein a head slider and a magnetic disk medium can be protected from an impact upon dropping of the apparatus without employing a loading/unloading mechanism is provided.

## Claims

1. A magnetic disk apparatus, comprising:
a housing(20);
a magnetic disk medium (2) accommodated for rotation in said housing;
spindle means (4) for rotating said magnetic disk medium;
a magnetic head (6) for writing and reading out information onto and from said magnetic disk medium;
head suspension means (8) for supporting said magnetic head thereon;
actuator means for driving said head suspension means to move said magnetic head in a radial direction of said magnetic disk medium; and
retraction means for retracting said magnetic head to a particular area on said magnetic disk medium when said spindle means is rendered inoperative;
**characterised in that** means (22, 24, 241) are provided at a location above said magnetic disk medium in an opposing relationship to said particular area of said magnetic disk medium for pressing at least one of said magnetic head and said head suspension means against said magnetic disk medium.

2. A magnetic disk apparatus according to claim 1, wherein said pressing means includes an L-shaped member (22) secured to an end of said head suspension means (18), and a load mechanism (24) mounted on said housing for pressing said L-shaped member.

3. A magnetic disk apparatus according to claim 1, wherein said pressing means includes a projection (26) provided on said head suspension means, and a load mechanism (24) mounted on said housing for pressing said projection.

4. A magnetic disk apparatus, comprising:
a housing (20);
a magnetic disk medium (2) accommodated for rotation in said housing;
spindle means (4) for rotating said magnetic disk medium;
a magnetic head (6) for writing and reading out information onto and from said magnetic disk medium;
head suspension means (8) for supporting said magnetic head thereon;
actuator means for driving said head suspension means to move said magnetic head in a radial direction of said magnetic disk medium;
retraction means for retracting said magnetic head to a particular area on said magnetic disk medium when said spindle means is rendered inoperative;
**characterised in that** displacement restriction means are provided for limiting vertical displacement of said head when an external force is applied to said magnetic disk apparatus, the displacement restriction means comprising a displacement restriction member (36) mounted on an inner side of the housing and located above the magnetic disk medium in an opposing relationship to the particular area of the magnetic disk medium, the displacement restriction means defining a gap of less than 200µm through which the head may be vertically displaced.

5. A magnetic disk apparatus according to claim 4, wherein said displacement restriction means includes an L-shaped member (22) secured to an end of said head suspension means (8), the L-shaped member and the displacement restriction member defining said gap of less than 200µm.

6. A magnetic disk apparatus according to claim 4, wherein said displacement restriction means includes a projection (26) provided on said head suspensions means, the projection and the displacement restriction member defining said gap of less than 200µm.

7. A magnetic disk apparatus, comprising:
a housing (20) ;
a magnetic disk medium (2) accommodated for rotation in said housing;
spindle means (4) for rotating said magnetic disk medium;
a magnetic head (6) for writing and reading out information onto and from said magnetic disk medium;
head suspension means (8) for supporting said magnetic head thereon; and
actuator means (10) for driving said head suspension means to move said magnetic head in a radial direction of said magnetic disk medium, said actuator means including an arm (17) to which said head suspension means is secured;
**characterised in that** a displacement restriction member (40) is secured to said arm and extends to a distal end of said head suspension means, the displacement restriction member and the magnetic head cooperatively defining a gap therebetween when the magnetic head is in the read/write position so as to restrict vertical displacement of the magnetic head when an external force is applied to the magnetic disk apparatus.

8. A magnetic disk apparatus, comprising:
a housing (20);
a magnetic disk medium (2) accommodated for rotation in said housing;
spindle means (4) for rotating said magnetic disk medium;
a magnetic head (6) for writing and reading out information onto and from said magnetic disk medium;
head suspension means (8) for supporting said magnetic head thereon;
actuator means (10) for driving said head suspension means to move said magnetic head in a radial direction to said magnetic disk medium; and
retraction means for retracting said magnetic head to a particular area on said magnetic disk medium when said spindle means is rendered inoperative;
**characterised in that** an arresting member (34) is secured to said head suspension means around a position at which said magnetic head is mounted on said head suspension means; and
a displacement restriction member (32) is provided at a location above said magnetic disk medium in an opposing relationship to said particular area of said magnetic disk medium, said displacement restriction member being made of a material which is flexible in a direction in a plane of a seeking direction of said magnetic head but is rigid in a direction perpendicular to the plane;
wherein, when said magnetic disk medium stops rotating, said displacement restriction member and said arresting member contact each other to prevent said magnetic head from moving away from a face of said magnetic disk medium.

## Patentansprüche

1. Magnetplattengerät, umfassend:
ein Gehäuse (20);
ein Magnetplattenmedium(2), welches drehbar in dem Gehäuse untergebracht ist;
Spindelmittel (4) zum Drehantreiben des Magnetplattenmediums;
einen Magnetkopf (6) zum Schreiben bzw. Auslesen von Informationen auf bzw. von dem Magnetplattenmedium;
Kopfaufhängungsmittel (8) zum Halten des Magnetkopfes auf diesen;
Stellantriebsmittel zum Antreiben der Kopfaufhängungsmittel, um den Magnetkopf in einer radialen Richtung des Magnetplattenmediums zu bewegen; und
Zurückziehmittel zum Zurückziehen des Magnetkopfes zu einem besonderen Bereich auf dem Magnetplattenmedium, wenn die Spindelmittel außer Betrieb gesetzt werden;
**dadurch gekennzeichnet, daß** Mittel (22, 24, 241) an einem Ort oberhalb des Magnetplattenmediums diesem besonderen Bereich des Magnetplattenmediums gegenüberliegend vorgesehen sind, um wenigstens eines der Bauteile, nämlich den Magnetkopf bzw. die Kopfaufhängungsmittel gegen das Magnetplattenmedium anzudrücken.

2. Magnetplattengerät nach Anspruch 1, bei welchem die Andrückmittel ein L-förmiges Element (22) umfassen, welches an einem Ende der Kopfaufhängungsmittel (18) befestigt ist, und einen Belastungsmechanismus (24), welcher an dem Gehäuse montiert ist, um gegen das L-förmige Element zu drücken.

3. Magnetplattengerät nach Anspruch 1, bei welchem die Andrückmittel einen Vorsprung (26) umfassen, welcher an den Kopfaufhängungsmitteln vorgesehen ist, sowie einen Belastungsmechanismus (24), welcher an dem Gehäuse vorgesehen ist, um auf diesen Vorsprung zu drücken.

4. Magnetplattengerät, umfassend:
ein Gehäuse (20);
ein Magnetplattenmedium (2), welches drehbar in dem Gehäuse untergebracht ist;
Spindelmittel (4) zum Drehantreiben des Magnetplattenmediums;
einen Magnetkopf (6) zum Schreiben bzw. Auslesen von Informationen auf bzw. von dem Magnetplattenmedium;
Kopfaufhängungsmittel (8) zum Halten des Magnetkopfes auf diesen;
Stellantriebsmittel zum Antreiben der Kopfaufhängungsmittel, um den Magnetkopf in einer radialen Richtung des Magnetplattenmediums zu bewegen;
Zurückziehmittel zum Zurückziehen des Magnetkopfes zu einem besonderen Bereich auf dem Magnetplattenmedium, wenn die Spindelmittel außer Betrieb gesetzt werden;
**dadurch gekennzeichnet, daß** Auslenkbeschränkungsmittel zum Begrenzen einer vertikalen Auslenkung des Kopfes vorgesehen sind, wenn eine externe Kraft auf das Magnetplattengerät aufgebracht wird, wobei die Auslenkbeschränkungsmittel ein Auslenkbeschränkungselement (36) umfassen, welches an einer inneren Seite des Gehäuses montiert und oberhalb des Magnetplattenmediums dem besonderen Bereich des Magnetplattenmediums gegenüberliegend angeordnet ist, wobei die Auslenkbeschränkungsmittel einen Spalt von weniger als 200 um definieren, über den der Kopf vertikal ausgelenkt werden kann.

5. Magnetplattengerät nach Anspruch 4, bei welchem die Auslenkbeschränkungsmittel ein L-förmiges Element (22) umfassen, welches an einem Ende der Kopfaufhängungsmittel (8) befestigt ist, wobei das L-förmige Element und das Auslenkbeschränkungselement diesen Spalt von weniger als 200 µm definieren.

6. Magnetplattengerät nach Anspruch 4, bei welchem die Auslenkbeschränkungsmittel einen Vorsprung (26) umfassen, welcher an den Kopfaufhängungsmitteln vorgesehen ist, wobei der Vorsprung und die Auslenkbeschränkungsmittel diesen Spalt von weniger als 200 µm definieren.

7. Magnetplattengerät, umfassend:
ein Gehäuse (20);
ein Magnetplattenmedium (2), welches drehbar in dem Gehäuse untergebracht ist;
Spindelmittel (4) zum Drehantreiben des Magnetplattenmediums;
einen Magnetkopf (6) zum Schreiben bzw. Auslesen von Informationen auf bzw. von dem Magnetplattenmedium;
Kopfaufhängungsmittel (8) zum Halten des Magnetkopfes auf diesen; und
Stellantriebsmittel (10) zum Antreiben der Kopfaufhängungsmittel, um den Magnetkopf in einer radialen Richtung des Magnetplattenmediums zu bewegen, wobei die Stellantriebsmittel einen Arm (17) umfassen, an welchem die Kopfaufhängungsmittel befestigt sind;
**dadurch gekennzeichnet, daß** ein Auslenkbeschränkungselement (40) an dem Arm befestigt ist und sich bis zu einem distalen Ende der Kopfaufhängungsmittel erstreckt, wobei das Auslenkbeschränkungselement und der Magnetkopf zusammenwirkend einen Spalt zwischen sich definieren, wenn der Magnetkopf sich in der Lese-/Schreibposition befindet, um eine vertikale Auslenkung des Magnetkopfes zu beschränken, wenn eine externe Kraft auf das Magnetplattengerät aufgebracht wird.

8. Magnetplattengerät, umfassend:
ein Gehäuse (20);
ein Magnetplattenmedium (2), welches drehbar in dem Gehäuse untergebracht ist;
Spindelmittel (4) zum Drehantreiben des Magnetplattenmediums;
einen Magnetkopf (6) zum Schreiben bzw. Auslesen von Informationen auf bzw. von dem Magnetplattenmedium;
Kopfaufhängungsmittel (8) zum Halten des Magnetkopfes auf diesen;
Stellantriebsmittel (10) zum Antreiben der Kopfaufhängungsmittel, um den Magnetkopf in einer radialen Richtung des Magnetplattenmediums zu bewegen; und
Zurückziehmittel zum Zurückziehen des Magnetkopfes zu einem bestimmten Bereich auf dem Magnetplattenmedium, wenn die Spindelmittel außer Betrieb gesetzt werden;
**dadurch gekennzeichnet, daß** ein Arretierelement (34) an den Kopfaufhängungsmitteln um eine Position befestigt ist, in welcher der Magnetkopf an den Kopfaufhängungsmitteln montiert ist; und
daß ein Auslenkbeschränkungselement (32) an einem Ort oberhalb des Magnetplattenmediums und dem besonderen Bereich des Magnetplattenmediums gegenüberliegend vorgesehen ist, wobei das Auslenkbeschränkungselement aus einem Material hergestellt ist, welches in der Richtung in einer Ebene einer Suchrichtung des Magnetkopfes flexibel ist, jedoch in einer Richtung senkrecht zu dieser Ebene starr ist;
wobei dann, wenn das Magnetplattenmedium seine Drehung stoppt, das Auslenkbeschränkungselement und das Arretierelement einander kontaktieren, um zu verhindern, daß der Magnetkopf sich von der Fläche des Magnetplattenmediums fortbewegt.

## Revendications

1. Appareil à disque magnétique, comprenant :
un boîtier (20) ;
un support d'information sous forme de disque magnétique (2) qui est logé de manière à pouvoir tourner dans ledit boîtier ;
un moyen d'arbre (4) pour entraîner en rotation ledit support d'information sous forme de disque magnétique ;
une tête magnétique (6) pour écrire et lire une information sur et à partir dudit support d'information sous forme de disque magnétique ;
un moyen de suspension de tête (8) pour supporter ladite tête magnétique dessus ;
un moyen d'actionneur pour entraîner ledit moyen de suspension de tête afin de déplacer ladite tête magnétique suivant une direction radiale dudit support d'information sous forme de disque magnétique ; et
un moyen de retrait pour retirer ladite tête magnétique jusqu'à une zone particulière sur ledit support d'information sous forme de disque magnétique lorsque ledit moyen d'arbre est rendu inopérant,
**caractérisé en ce qu'**un moyen (22, 24, 241) est prévu en un emplacement au-dessus dudit support d'information sous forme de disque magnétique selon une relation d'opposition par rapport à ladite zone particulière dudit support d'information sous forme de disque magnétique pour presser au moins un élément pris parmi ladite tête magnétique et ledit moyen de suspension de tête contre ledit support d'information sous forme de disque magnétique.

2. Appareil à disque magnétique selon la revendication 1, dans lequel ledit moyen de pression inclut un élément en forme de L (22) qui est fixé à une extrémité dudit moyen de suspension de tête (8), et un mécanisme de charge (24) qui est monté sur ledit boîtier pour presser ledit élément en forme de L.

3. Appareil à disque magnétique selon la revendication 1, dans lequel ledit moyen de pression inclut une protubérance (26) qui est prévue sur ledit moyen de suspension de tête, et un mécanisme de charge (24) qui est monté sur ledit boîtier pour presser ladite protubérance.

4. Appareil à disque magnétique, comprenant
un boîtier (20) ;
un support d'information sous forme de disque magnétique (2) qui est logé de manière à pouvoir tourner dans ledit boîtier ;
un moyen d'arbre (4) pour entraîner en rotation ledit support d'information sous forme de disque magnétique ;
une tête magnétique (6) pour écrire et lire une information sur et à partir dudit support d'information sous forme de disque magnétique ;
un moyen de suspension de tête (8) pour supporter ladite tête magnétique dessus ;
un moyen d'actionneur pour entraîner ledit moyen de suspension de tête afin de déplacer ladite tête magnétique suivant une direction radiale dudit support d'information sous forme de disque magnétique ; et
un moyen de retrait pour retirer ladite tête magnétique jusqu'à une zone particulière sur ledit support d'information sous forme de disque magnétique lorsque ledit moyen d'arbre est rendu inopérant,
**caractérisé en ce qu'**un moyen de restriction de déplacement est prévu pour limiter un déplacement vertical de ladite tête lorsqu'une force externe est appliquée sur ledit appareil à disque magnétique, le moyen de restriction de déplacement comprenant un élément de restriction de déplacement (36) qui est monté sur un côté interne du boîtier et qui est localisé au-dessus du support d'information sous forme de disque magnétique selon une relation d'opposition par rapport à la zone particulière du support d'information sous forme de disque magnétique, le moyen de restriction de déplacement définissant un espace qui est inférieur à 200 µm au travers duquel la tête peut être déplacée verticalement.

5. Appareil à disque magnétique selon la revendication 4, dans lequel ledit moyen de restriction de déplacement inclut un élément en forme de L (22) qui est fixé à une extrémité dudit moyen de suspension de tête (8), l'élément en forme de L et l'élément de restriction de déplacement définissant ledit espace qui est inférieur à 200 µm.

6. Appareil à disque magnétique selon la revendication 4, dans lequel ledit moyen de restriction de déplacement inclut une protubérance (26) qui est prévue sur ledit moyen de suspension de tête, la protubérance et l'élément de restriction de déplacement définissant ledit espace qui est inférieur à 200 µm.

7. Appareil à disque magnétique, comprenant :
un boîtier (20) ;
un support d'information sous forme de disque magnétique (2) qui est logé de manière à pouvoir tourner dans ledit boîtier ;
un moyen d'arbre (4) pour entraîner en rotation ledit support d'information sous forme de disque magnétique ;
une tête magnétique (6) pour écrire et lire une information sur et à partir dudit support d'information sous forme de disque magnétique ;
un moyen de suspension de tête (8) pour supporter ladite tête magnétique dessus ; et
un moyen d'actionneur (10) pour entraîner ledit moyen de suspension de tête afin de déplacer ladite tête magnétique suivant une direction radiale dudit support d'information sous forme de disque magnétique, ledit moyen d'actionneur incluant un bras (17) auquel ledit moyen de suspension de tête est fixé,
**caractérisé en ce qu'**un élément de restriction de déplacement (40) est fixé audit bras et s'étend jusqu'à une extrémité distale dudit moyen de suspension de tête, le moyen de restriction de déplacement et la tête magnétique définissant en coopération un espace entre eux lorsque la tête magnétique est dans la position d'écriture/lecture de manière à restreindre un déplacement vertical de la tête magnétique lorsqu'une force exteme est appliquée sur l'appareil à disque magnétique.

8. Appareil à disque magnétique, comprenant :
un boîtier (20) ;
un support d'information sous forme de disque magnétique (2) qui est logé de manière à pouvoir tourner dans ledit boîtier ;
un moyen d'arbre (4) pour entraîner en rotation ledit support d'information sous forme de disque magnétique ;
une tête magnétique (6) pour écrire et lire une information sur et à partir dudit support d'information sous forme de disque magnétique ;
un moyen de suspension de tête (8) pour supporter ladite tête magnétique dessus ;
un moyen d'actionneur (10) pour entraîner ledit moyen de suspension de tête afin de déplacer ladite tête magnétique suivant une direction radiale dudit support d'information sous forme de disque magnétique ; et
un moyen de retrait pour retirer ladite tête magnétique jusqu'à une zone particulière sur ledit support d'information sous forme de disque magnétique lorsque ledit moyen d'arbre est rendu inopérant,
**caractérisé en ce qu'**un moyen d'arrêt (34) est fixé audit moyen de suspension de tête au voisinage d'une position au niveau de laquelle ladite tête magnétique est montée sur ledit moyen de suspension de tête ; et
un élément de restriction de déplacement (32) est prévu en un emplacement au-dessus dudit support d'information sous forme de disque magnétique selon une relation d'opposition par rapport à ladite zone particulière dudit support d'information sous forme de disque magnétique, ledit élément de restriction de déplacement étant réalisé en un matériau qui est flexible suivant une direction dans un plan d'une direction de recherche de ladite tête magnétique mais qui est rigide suivant une direction qui est perpendiculaire au plan,
dans lequel, lorsque ledit support d'information sous forme de disque magnétique s'arrête de tourner, ledit élément de restriction de déplacement et ledit élément d'arrêt entrent en contact l'un avec l'autre de manière à empêcher que ladite tête magnétique ne s'éloigne d'une face dudit support d'information sous forme de disque magnétique.
